# EUROPÄISCHE PATENTSCHRIFT

(11) **EP 1 546 658 B1**
(45) Veröffentlichungstag und Bekanntmachung des Hinweises auf die Patenterteilung: **14.11.2007**
(21) Anmeldenummer: 03748065.4
(22) Anmeldetag: 19.09.2003
(51) Int. Cl.: G01D 5/244

(54) **VERFAHREN ZUM BETRIEB EINER POSITIONSMESSEINRICHTUNG UND GEEIGNETE POSITIONSMESSEINRICHTUNG HIERZU**
METHOD FOR OPERATING A POSITIONAL MEASUREMENT DEVICE AND CORRESPONDING POSITIONAL MEASUREMENT DEVICE
PROCEDE POUR FAIRE FONCTIONNER UN DISPOSITIF DE MESURE DE POSITION ET DISPOSITIF DE MESURE DE POSITION CORRESPONDANT

(30) Priorität: 25.09.2002 DE 10244582
(43) Veröffentlichungstag der Anmeldung: 29.06.2005
(73) Patentinhaber: Dr. Johannes Heidenhain GmbH, 83292 Traunreut (DE)
(72) Erfinder: HOFBAUER, Hermann, 83308 Trostberg (DE); STRASSER, Erich, 83308 Trostberg (DE)
(86) Internationale Anmeldenummer: PCT/EP2003/010447
(87) Internationale Veröffentlichungsnummer: WO 2004/031694

(56) Entgegenhaltungen:
- EP-B- 0 660 209
- US-A1- 2001 001 540
- US-A1- 2002 195 576

## Beschreibung

Die vorliegende Erfindung betrifft ein Verfahren zum Betrieb einer Positionsmesseinrichtung sowie eine geeignete Positionsmesseinrichtung hierzu.

In Positionsmesseinrichtungen, die im Automatisierungsbereich eingesetzt werden, erfolgt die Übertragung von Daten zwischen der Positionsmesseinrichtung zu einer nachgeordneten Folgeelektronik oftmals über digitale, serielle Schnittstellen. Auf Seiten der Positionsmesseinrichtung ist hierbei eine Architektur dergestalt vorgesehen, dass diese eine Signalerzeugungseinheit umfasst, die über eine interne Schnittstelleneinheit mit einer Kommunikationseinheit verbunden ist. Über die Kommunikationseinheit wiederum erfolgt die Kommunikation mit der Folgeelektronik. Mit Hilfe der Signalerzeugungseinheit werden z.B. in bekannter Art und Weise analoge, positionsabhängige Signale aus der Abtastung einer geeigneten Messteilung erzeugt und geeignet aufbereitet, um über die Kommunikationseinheit in serieller Form an die Folgeelektronik übertragen zu werden. Die interne Schnittstelleneinheit ist vorgesehen, um im Rahmen eines modularen Systemkonzeptes flexibel verschiedenste Kommunikationseinheiten mit verschiedensten Signalerzeugungseinheiten kombinieren zu können.

Als grundsätzlich zeitkritisch ist in einer solchen Architektur die Übertragung eines Messdatenanforderungsbefehles von der Folgeelektronik an die Signalerzeugungseinheit und dessen Abarbeitung durch die Signalerzeugungseinheit, d.h. die eigentliche Messwerterfassung, anzusehen. Über die Messdatenanforderungsbefehle werden beispielsweise aktuelle Positionsdaten von der Positionsmesseinrichtung zu Regelungszwecken abgerufen. Um eine hohe Regelungsgüte auf Seiten der Folgeelektronik zu gewährleisten, ist eine möglichst verzögerungsfreie Erfassung von Messdaten, respektive Positionsdaten, wünschenswert.

Die EP 0660209 B1 beschreibt eine Positionsmesseinrichtung, der von einer Verarbeitungseinheit Befehle in Form von bitseriell übertragenen Datenwörtern übermittelt werden und in Abhängigkeit dieser Befehle Positionsmesswerte oder Parameter von der Positionsmesseinrichtung angefordert, bzw. Parameter zur Positionsmesseinrichtung gesendet werden.

Weiter beschreibt die U.S 2001/0001540 A1 eine Positionsmesseinrichtung, bei der bei einer Positionsdatenanforderung ein Positionsmesswert übermittelt wird, der auf einem Positionsmesswert basiert, der bereits zu einem früheren Zeitpunkt gemessen und mathematisch so korrigiert wurde, dass er dem _ aktuellen Positionswert zum Zeitpunkt der Positionsdatenanforderung entspricht. Nachteilig an einer derartigen Positionsmesseinrichtung ist, dass die Genauigkeit der Positionsmesswerte von der Genauigkeit der zur Korrektur benötigten Parameter, wie beispielsweise der Zeitspanne zwischen der Erfassung des Positionsmesswertes und dem Eintreffen einer Positionsdatenanforderung, sowie der Änderungsgeschwindigkeit der Positionsmesswerte (z.B. Verfahrgeschwindigkeit einer von der Positionsmesseinrichtung überwachten Werkzeugmaschinenachse) abhängt.

Aufgabe der vorliegenden Erfindung ist es daher, ein Verfahren zum Betrieb einer Positionsmesseinrichtung sowie eine entsprechende Positionsmesseinrichtung anzugeben, wobei innerhalb der oben erläuterten Architektur eine möglichst unverzögerte Abarbeitung eines Messdatenanforderungsbefehles auf Seiten der Positionsmesseinrichtung gewährleistet werden kann.

Die erstgenannte Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Die zweite Aufgabe wird durch eine Positionsmesseinrichtung mit den Merkmalen des Anspruches 7 gelöst.

Vorteilhafte Ausführungsformen der erfindungsgemäßen Positionsmesseinrichtung ergeben sich aus den Maßnahmen, die in den von Anspruch 7 abhängigen Patentansprüchen aufgeführt sind.

Erfindungsgemäß ist nunmehr vorgesehen, insbesondere bei der zeitkritischen Übertragung und Abarbeitung von Messdatenanforderungsbefehlen an bzw. durch die Signalerzeugungseinheit, die interne Schnittstelleneinheit der Positionsmesseinrichtung zu umgehen und die entsprechenden Befehle möglichst ohne weiteren zeitlichen Verzug an die Signalerzeugungseinheit zu übertragen. Eine ggf. in der Schnittstelleneinheit resultierende zusätzliche Signalverarbeitungszeit lässt sich somit für die zeitkritischen Messdatenanforderungsbefehle vermeiden, ein zeitdeterminiertes Abarbeiten von Messdatenanforderungsbefehlen ist gewährleistet.

Die erfindungsgemäßen Maßnahmen lassen sich in Verbindung mit den verschiedenartigsten Positionsmesseinrichtungen einsetzen, unabhängig davon, ob es sich um inkrementale oder absolute Positionsmesseinrichtungen handelt bzw. unabhängig vom jeweiligen Abtast- und Signalerzeugungsprinzip.

Weitere Vorteile sowie Einzelheiten der vorliegenden Erfindung ergeben sich aus der nachfolgenden Beschreibung der beiliegenden Figuren.

Dabei zeigt
- Figur 1: ein schematisiertes Blockschaltbild einer möglichen Ausführungsform der erfindungsgemäßen Positionsmesseinrichtung in Verbindung mit einer Folgeelektronik;
- Figur 2: eine bevorzugte Ausführungsform einer erfindungsgemäßen Positionsmesseinrichtung;
- Figur 3: ein Signaldiagramm des zeitlichen Ablaufs einer Messdatenanforderung bei einer Positionsmesseinrichtung nach Figur 2.

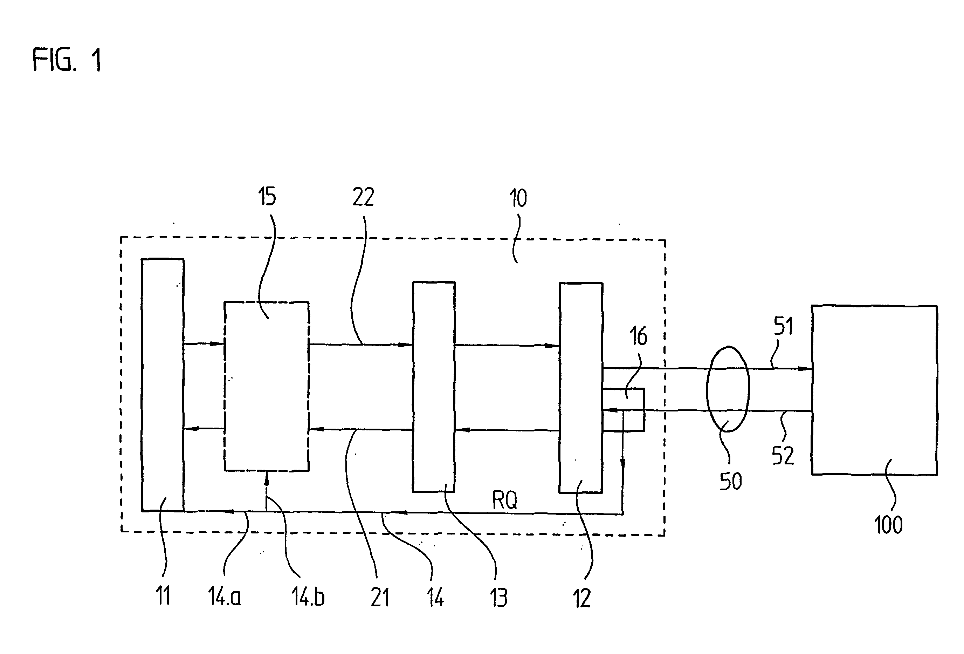

Figur 1 zeigt ein schematisiertes Blockschaltbild einer möglichen Ausführungsform der erfindungsgemäßen Positionsmesseinrichtung 10 in Verbindung mit einer Folgeelektronik 100. Die verschiedenen Komponenten des Gesamtsystems sind hierbei aus Gründen der besseren Übersichtlichkeit lediglich stark schematisiert angedeutet.

Die Positionsmesseinrichtung 10 kann beispielsweise als bekanntes inkrementales oder absolutes Positionsmesssystem ausgebildet sein, das zur Bestimmung der Position zweier zueinander beweglicher Objekte dient, etwa an einer Werkzeugmaschine. Als Folgeelektronik fungiert in einer solchen Anwendung eine numerische Werkzeugmaschinensteuerung.

Die Übertragung von Daten erfolgt zwischen der Positionsmesseinrichtung 10 und der Folgeelektronik 100 über einen Datenkanal 50 in bidirektionaler, serieller Form. Der Datenkanal 50 umfasst hierzu zwei schematisiert angedeutete erste Signalübertragungsleitungen 51, 52, über die die Übertragung von Daten in der durch die Pfeile angegebenen Richtung erfolgt. Grundsätzlich kann der Datenkanal 50 aber auch anders ausgebildet sein.

Auf Seiten der Positionsmesseinrichtung 10 ist zur Abwicklung des Datenaustausches mit der Folgeelektronik 100 eingangsseitig eine schematisch angedeutete Kommunikationseinheit 12 vorgesehen, die sowohl für das Senden bzw. das Empfangen der jeweiligen Daten zu bzw. von der Folgeelektronik 100 zuständig ist. Je nach gewählter Schnittstellenphysik bzw. verwendetem Schnittstellen-Protokoll kann die Kommunikationseinheit 12 unterschiedlich ausgebildet sein. Das heißt, die vorliegende Erfindung kann in Verbindung mit unterschiedlichsten Schnittstellen- und ggf. Bus-Konzepten eingesetzt werden.

Die Kommunikationseinheit 12 ist in Figur 1 in schematischer Form als lediglich eine einzige Einheit angedeutet, kann jedoch in der Praxis deutlich komplexer ausgebildet sein. So soll der Begriff Kommunikationseinheit grundsätzlich alle benötigten Bauelemente und Komponenten auf Seiten der Positionsmesseinrichtung umfassen, die zur Kommunikation mit der Folgeelektronik nötig sind. Dies können neben schnittstellenspezifischen Protokollbausteinen, Leitungstreibern, Leitungsempfängern, Übertragern, Controllern, Takt-Daten-Rückgewinnungsbausteinen eine Vielzahl weiterer Hard- und Software-Elemente bis hin zu den erforderlichen Steckverbindungen etc. sein.

Zur Erzeugung der eigentlichen Messdaten umfasst die erfindungsgemäße Positionsmesseinrichtung 10 ferner eine ebenfalls nur schematisiert angedeutete Signalerzeugungseinheit 11. Über diese erfolgt in der Positionsmesseinrichtung die Erzeugung von Messdaten, insbesondere von Positionsdaten. Hierbei kann etwa die Erzeugung von Positionsdaten aus der Abtastung einer - nicht dargestellten - Messteilung mittels einer relativ hierzu beweglichen Abtasteinheit erfolgen, die geeignete Abtastelemente umfasst. Als Abtastprinzipien kommen verschiedenste bekannte Varianten in Frage, also z.B. optische, magnetische, kapazitive oder induktive Abtastungen, über die jeweils positionsabhängige Analogsignale erzeugbar sind. Bei den erzeugten Positionsdaten kann es sich ferner um unterschiedlichste Arten von Positionsdaten handeln, wie z.B. um inkrementale Positionsdaten, absolute Positionsdaten etc.. Aufgrund der vielfältigen Möglichkeiten zur Erzeugung der jeweiligen Positionsdaten wurde die Signalerzeugungseinheit in Figur 1 lediglich schematisch angedeutet.

Optional können in der jeweiligen Positionsmesseinrichtung 10 ferner Signalverarbeitungsmittel 15 angeordnet sein, über die die erzeugten - zumeist analogen - Messdaten bzw. Positionsdaten weiterverarbeitet werden. Auch für die Weiterverarbeitung der erzeugten Positionsdaten gibt es unterschiedlichste Möglichkeiten, je nach Art der Positionsmesseinrichtung und Applikation desselben. Beispielsweise kann es sich hierbei um eine Signalvorverarbeitung, Signalfilterung, Signalanpassung handeln, bevor ferner etwa eine A/D-Wandlung und eine anschließende digitale Signalverarbeitung erfolgt. Im Rahmen einer digitalen Signalverarbeitung können ebenfalls vielfältigste Verfahren vorgesehen sein, beispielsweise eine Signalkorrektur, eine Signalinterpolation, eine Signalüberwachung, eine Signaldiagnose etc.. Aufgrund dieser vielfältigen Möglichkeiten zur Signalverarbeitung seien die Signalverarbeitungsmittel 15 in Figur 1 wiederum nur schematisiert angedeutet; die Signalverarbeitungseinheit 15 kann demzufolge selbstverständlich auch aus mehreren Bauelementen bestehen.

Wie bereits eingangs angedeutet, umfasst die erfindungsgemäße Positionsmesseinrichtung 10 ferner eine interne Schnittstelleneinheit 13. Die interne Schnittstelleneinheit 13 ist nicht als physikalische, sondern als logische Einheit zu verstehen, die zwischen der Signalerzeugungseinheit 11. und den optionalen Signalverarbeitungsmitteln 15 einerseits und der Kommunikationseinheit 12 andererseits angeordnet ist. Die interne Schnittstelleneinheit 13 erweist sich insbesondere hinsichtlich eines modularen Systemaufbaus als zweckmäßig, da dann flexibel unterschiedlichste Varianten zur Signalerzeugung mit den verschiedenen Signalübertragungsprinzipien in Richtung der Folgeelektronik 100 kombinierbar sind. In anderen Worten ausgedrückt: unterschiedlichste Varianten von Signalerzeugungseinheiten 11 und ggf., Signalverarbeitungseinheiten 15 können anwendungsabhängig flexibel mit unterschiedlichsten Kommunikationseinheiten 12 kombiniert werden.

Die interne Schnittstelleneinheit 13 kann hierzu in bekannter Art und Weise als bidirektionale Schnittstelle ausgebildet sein, wobei wiederum verschiedenste Schnittstellenarchitekturen in Betracht kommen. In Figur 1 wird das durch einen Adressierungskanal 21 und einen Datensendekanal 22 angedeutet.

Im Rahmen der vorliegenden Erfindung ist nunmehr vorgesehen, insbesondere die zeitkritischen Messdatenanforderungsbefehle RQ, die von der Folgelektronik 100 über die Signalübertragungsleitung 51 des Datenkanals 50 übertragen werden, unter Umgehung der internen Schnittstelleneinheit 13 an die Signalerzeugungseinheit 11 zu übertragen und dort möglichst umgehend deren Abarbeitung, d.h. die Messwerterfassung zu veranlassen. Wie in Figur 1 angedeutet erfolgt dies etwa, indem die Messdatenanforderungsbefehle RQ über einen separaten Datenkanal 14 in Richtung der Signalerzeugungseinheit 11 übertragen werden, also nicht über die ansonsten zur Signalübertragung in der Positionsmesseinrichtung 10 genutzte interne Schnittstelleneinheit 13. Beispielsweise kann der separate Datenkanal 14 als separate Verbindungsleitung ausgebildet sein, der die interne Schnittstelleneinheit 13 umgeht.

Wie aus den beiden alternativen separaten Datenkanälen 14.a, 14.b aus Figur 1 ersichtlich ist, kann vorgesehen sein, die Messdatenanforderungsbefehle RQ über den Datenkanal 14.a direkt an die Signalerzeugungseinheit zu übermitteln; alternativ ist es möglich, dass der Messdatenanforderungsbefehl RQ über den Datenkanal 14.b an die Signalverarbeitungseinheit 15 übermittelt wird. Letzteres kann etwa vorgesehen sein, wenn die Übertragung von Messdaten von der Folgeelektronik 100 angefordert wird, die von den eigentlichen Positionsdaten abgeleitet werden. Hierbei kann es sich beispielsweise um die Messdaten bzgl. Beschleunigung oder Ruck handeln, die sich aus der Ableitung der Positionsdaten ergeben; die entsprechende Signalverarbeitung und -aufbereitung aus den Positionsdaten erfolgt dann in der Signalverarbeitungseinheit 15.

Zur erläuterten Umgehung der Kommunikationseinheit 12 ist es erforderlich, die Messdatenanforderungsbefehle RQ im Datenstrom, der von der Folgeelektronik 100 übertragen wird, zu identifizieren und zu separieren. Zu diesem Zweck sind der Positionsmesseinrichtung 10 bzw. der Kommunikationseinheit 12 Umleitungsmittel in Form einer entsprechenden Einheit 16 und eines separaten Datenkanals 14 zugeordnet, die diese Funktion übernimmt. Im ankommenden Datenstrom auf der Signalübertragungsleitung 52 werden die Messdatenanforderungsbefehle RQ identifiziert, separiert und über den Datenkanal 14 unter Umgehung der internen Schnittstelleneinheit 13 in Richtung der Signalerzeugungseinheit 11 umgeleitet. Hierzu werden die separierten Messdatenanforderungsbefehle RQ geeignet aufbereitet, so dass die gewünschte verzögerungsfreie Übertragung an die Signalerzeugungseinheit 11 möglich ist. Die ansonsten in der internen Schnittstelleneinheit 13 resultierende Verzögerung aufgrund der dort benötigten Signalverarbeitungszeit entfällt somit aufgrund der erfindungsgemäßen Maßnahmen. Eine umgehende Messwerterfassung auf Seiten der Positionsmesseinrichtung 10 ist sichergestellt.

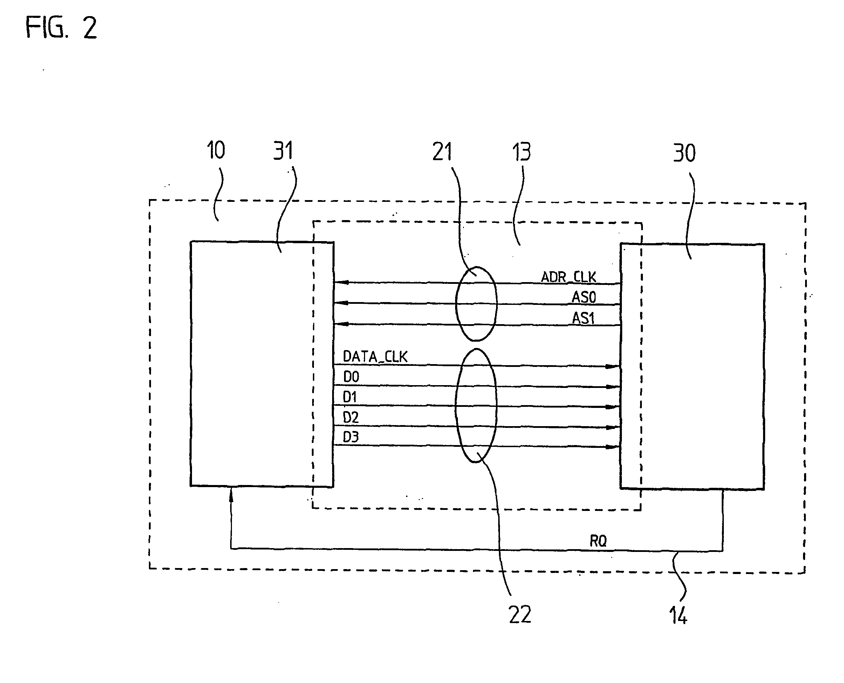

Figur 2 zeigt eine bevorzugte Ausführungsform einer erfindungsgemäßen Positionsmesseinrichtung 10 im Detail. Aus Gründen der Übersichtlichkeit wurden die Kommunikationseinheit 12, sowie die Einheit 16, die die Umleitungsmittel für die Messdatenanforderungsbefehle RQ bereitstellt, in einer Datenübertragungseinheit 30 zusammengefasst. Ebenso wurden die Signalerzeugungseinheit 11 und die optionale Signalverarbeitungseinheit 15 zu einer Datenerfassungseinheit 31 zusammengefasst. Die interne Schnittstelleneinheit 13, die als logische Einheit den Datenaustausch zwischen der Datenübertragungseinheit 30 und der Datenerfassungseinheit 31 steuert, ist nur schematisch angedeutet. Zum besseren Verständnis sind gleiche Komponenten in allen Figuren mit gleichen Bezugszeichen versehen.

Die Übertragung von Daten von der Datenübertragungseinheit 30 zur Datenerfassungseinheit 31 erfolgt über einen Adressierungskanal 21. In der umgekehrten Richtung, also von der Datenerfassungseinheit 31 zur Datenübertragungseinheit 30, erfolgt die Datenübertragung über einen Datensendekanal 22.

Der Adressierungskanal 21 dient zum Senden von Datenanforderungsbefehlen und zum Übertragen von Parametern von der Datenübertragungseinheit 30 zur Datenerfassungseinheit 31. Über n Adressierungsleitungen AS0 - AS(n-1) werden die Daten synchron zum Taktsignal auf einer Adresstaktleitung ADR_CLK in Form von seriellen Datenpaketen übertragen. Die Anzahl n der Adressierungsleitungen ist beliebig, wobei in der Datentechnik üblicherweise Potenzen der Zahl 2 (1, 2, 4, 8, ...) gewählt werden. Weitere Kriterien sind beispielsweise die Komplexität des verwendeten Übertragungsprotokolls, die Menge der zu übertragenden Daten, sowie die Anzahl der verfügbaren Anschlüsse an den Datenübertragungsbausteinen. In dieser bevorzugten Ausführungsform wurde n=2 gewählt.

Die Art der Daten, die von der Datenerfassungseinheit 31 angefordert werden, ist dabei nicht auf Positionsdaten bzw. Messdaten beschränkt. So kann beispielsweise auch das Senden von Fehlermeldungen, Warnungen und Diagnosewerten initiiert werden. Außerdem können über den Adressierungskanal 21 Parameter übertragen werden, die für den Betrieb der Datenerfassungseinheit 31 benötigt werden, z.B. Korrekturwerte.

Der Datensendekanal 22 dient zum Übertragen angeforderter Daten von der Datenerfassungseinheit 31 zur Datenübertragungseinheit 30. Dafür sind m Datenleitungen D0 - D(m-1), sowie eine Datentaktleitung DATA_CLK vorgesehen. Auch die Anzahl m der Datenleitungen ist beliebig, es gelten die selben Auswahlkriterien wie bei der Anzahl n der Adressierungsleitungen. Im beschriebenen Beispiel ist m=4.

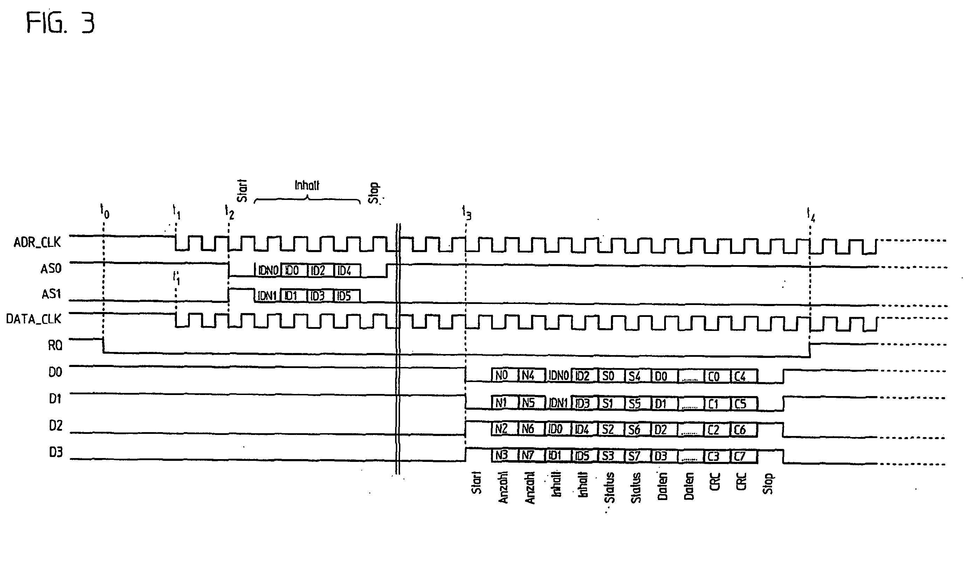

Die Übertragung von Daten auf den Datenleitungen D0 - D(m-1) erfolgt synchron zu einem Taktsignal auf der Datentaktleitung DATA_CLK. Dabei ist es besonders vorteilhaft, wenn als Taktsignal auf der Datentaktleitung DATA_CLK das um die Signallaufzeit in der Datenerfassungseinheit 31 verzögerte Taktsignal der Adresstaktleitung ADR_CLK verwendet wird, da so auf einfache Weise ein Taktsignal für die synchrone Datenübertragung gewonnen werden kann und deshalb in der Datenerfassungseinheit 31 kein separates Taktsignal erzeugt werden muss. Die Verzögerung zwischen dem Taktsignal der Adresstaktleitung ADR_CLK und dem Taktsignal auf der Datentaktleitung DATA_CLK ist üblicherweise sehr gering und in Figur 3 nur durch den Zeitpunkt t1' angedeutet, der dem um die Signallaufzeit verzögerten Zeitpunkt t1 entspricht.

Die Messdatenanforderungsbefehle RQ werden, wie oben beschrieben, aus dem Datenstrom, der von der Folgeelektronik 100 übertragen wird, identifiziert, separiert und über den separaten Datenkanal 14 zur Datenerfassungseinheit 31 geleitet. Der Zeitgewinn, der durch diese Anordnung resultiert, ist in Figur 3 deutlich erkennbar.

Figur 3 zeigt ein Signaldiagramm des zeitlichen Ablaufs einer Messdatenanforderung. Zuerst signalisiert zum Zeitpunkt t0 eine fallende Flanke auf dem separaten Datenkanal 14 der Datenerfassungseinheit 31 einen Messdatenanforderungsbefehl RQ und die Messdatenerfassung wird ohne weitere Zeitverzögerung gestartet. Erst nach einer gewissen Zeit, die von der Verarbeitungszeit in der Datenübertragungseinheit 30 abhängt, wird zum Zeitpunkt t1 ein Taktsignal auf der Adresstaktleitung ADR_CLK gestartet. Anschließend wird synchron zum Taktsignal auf der Adresstaktleitung ADR_CLK ab dem Zeitpunkt t2 über die Leitungen AS0 und AS1 ein serielles Datenpaket mit der Information über die Art der angeforderten Daten von der Datenübertragungseinheit 30 zur Datenerfassungseinheit 31 übertragen.

Da der Zeitpunkt t1 bei einer Positionsmesseinrichtung ohne die erfindungsgemäßen Umleitungsmaßnahmen der früheste Zeitpunkt ist, bei dem eine Messdatenerfassung gestartet werden kann, errechnet sich der Zeitgewinn der erfindungsgemäßen Positionsmesseinrichtung aus der Differenz zwischen t1 und t0.

Wenn zum Zeitpunkt t3 die angeforderten Daten in der Datenerfassungseinheit 31 bereitstehen, beginnt die Übertragung zur Datenübertragungseinheit 30 über die Datenleitungen D0 D3 in Form eines seriellen Datenpaketes. Ohne die erfindungsgemäßen Maßnahmen wäre der Zeitpunkt t3 um die Differenz zwischen t1 und t0 verzögert, d.h. die Übertragung der Daten könnte erst deutlich später beginnen. Wie bereits beschrieben, verläuft die Übertragung synchron zum Taktsignal auf der Datentaktleitung DATA_CLK. Wenn zum Zeitpunkt t4 die Datenübertragung beendet ist, signalisiert eine steigende Flanke auf dem separaten Datenkanal 14, dass der Messdatenanforderungsbefehl RQ abgearbeitet ist. Zum Schluss der Datenübertragung werden auch die Taktsignale auf der Adresstaktleitung ADR_CLK und der Datentaktleitung DATA_CLK gestoppt.

Der Aufbau der seriellen Datenpakete kann beliebig sein. Neben den eigentlich zu übertragenden Daten können sie beispielsweise auch Angaben zu Inhalt und Größe des Datenpaketes, Statusinformationen oder Prüfsummen enthalten.

Da die Kommunikation zwischen der Datenerfassungseinheit 31 und der Datenübertragungseinheit 30 auf zwei getrennten Datenkanälen abläuft, ist es möglich, noch vor Ende der Datenübertragung weitere Daten anzufordern.

Neben den erläuterten Ausführungsbeispielen existieren im Rahmen der vorliegenden Erfindung selbstverständlich noch weitere Ausführungsalternativen.

## Patentansprüche

1. Verfahren zum Betrieb einer Positionsmesseinrichtung (10), die eine Signalerzeugungseinheit (11) zur Erzeugung von Positionsdaten aufweist und über eine Kommunikationseinheit (12) mit einer Folgeelektronik (100) verbunden ist, wobei die Übertragung von Daten zwischen der Signalerzeugungseinheit (11) und der Kommunikationseinheit (12) über eine interne Schnittstelleneinheit (13) erfolgt, mit folgenden Schritten:
- Übertragung von Messdatenanforderungsbefehlen (RQ), die von der Folgeelektronik (100) an die Positionsmesseinrichtung (10) übertragen werden, ohne weitere Zeitverzögerung zur Erzeugung von Messdaten unter Umgehung der internen Schnittstelleneinheit (13) an die Signalerzeugungseinheit (11),
- Übertragung der als Folge der Messdatenanforderungsbefehle (RQ) erzeugten Positionsdaten von der Signalerzeugungseinheit (11) zur Kommunikationseinheit (12) über die interne Schnittstelleneinheit (13).

2. Verfahren nach Anspruch 1, wobei die Messdatenanforderungsbefehle (RQ) über einen separaten Datenkanal (14) an die Signalerzeugungseinheit (11) übertragen werden.

3. Verfahren nach Anspruch 2, wobei die Messdatenanforderungsbefehle (RQ) über eine separate Verbindungsleitung an die Signalerzeugungseinheit (11) übertragen werden.

4. Verfahren nach Anspruch 1, wobei in der Kommunikationseinheit (12) die Messdatenanforderungsbefehle (RQ) in dem von der Folgeelektronik (100) übertragenen Datenstrom identifiziert werden.

5. Verfahren nach Anspruch 4, wobei die identifizierten Messdatenanforderungsbefehle (RQ) aus dem Datenstrom separiert werden, der von der Kommunikationseinheit (12) an die interne Schnittstelleneinheit (13) übermittelt wird.

6. Verfahren nach Anspruch 1, wobei über die Messdatenanforderungsbefehle (RQ) neben den Positionsdaten auch weitere Messdaten von der Positionsmesseinrichtung (10) angefordert werden, die von den Positionsdaten abgeleitet werden.

7. Positionsmesseinrichtung mit
- einer Signalerzeugungseinheit (11) zur Erzeugung von Messdaten,
- einer Kommunikationseinheit (12), über die die Positionsmesseinrichtung (10) mit einer Folgeelektronik (100) verbunden ist,
- einer internen Schnittstelleneinheit (13), über die die Übertragung von Daten zwischen der Signalerzeugungseinheit (11) und der Kommunikationseinheit (12) erfolgt,
- wobei Umleitungsmittel vorgesehen sind, über die Messdatenanforderungsbefehle (RQ), die von der Folgeelektronik (100) an die Positionsmesseinrichtung (10) übertragen werden, ohne weitere Zeitverzögerung zur Erzeugung von Messdaten unter Umgehung der internen Schnittstelleneinheit (13) an die Signalerzeugungseinheit (11) übertragbar sind und
- die Umleitungsmittel eine Einheit (16), über die die Identifikation von Messdatenanforderungsbefehlen (RQ) in dem von der Folgeelektronik (100) übertragenen Datenstrom und eine Trennung der identifizierten Messdatenanforderungsbefehle (RQ) aus diesem Datenstrom erfolgt, sowie einen separaten Datenkanal (14) zwischen der Kommunikationseinheit (12) und der Signalerzeugungseinheit (11) zur Umleitung der Messdatenanforderungsbefehle (RQ) unter Umgehung der internen Schnittstelleneinheit (13) an die Signalerzeugungseinheit (11) umfassen.

8. Positionsmesseinrichtung nach Anspruch 7, wobei der Datenkanal (14) als separate Verbindungsleitung ausgebildet ist.

9. Positionsmesseinrichtung nach Anspruch 7, wobei die Kommunikationseinheit (12) derart ausgebildet ist, dass eine bidirektionale serielle Kommunikation zwischen der Positionsmesseinrichtung (10) und der Folgeelektronik (100) möglich ist.

10. Positionsmesseinrichtung nach Anspruch 7, wobei zwischen der Signalerzeugungseinheit (11) und der internen Schnittstelleneinheit (13) weitere Signalverarbeitungsmittel (15) angeordnet sind, über die eine Verarbeitung der erzeugten Positionsdaten möglich ist.

11. Positionsmesseinrichtung nach Anspruch 7, wobei die Datenübertragung von der internen Schnittstelleneinheit (13) zur Signalerzeugungseinheit (11) über einen Adressierungskanal (21) und die Datenübertragung von der Signalerzeugungseinheit (11) zur internen Schnittstelleneinheit (13) über einen Datensendekanal (22) erfolgt.

12. Positionsmesseinrichtung nach Anspruch 11, wobei der Adressierungskanal (21) aus einer Adresstaktleitung (ADR_CLK) und n Adressleitungen (AS0 - AS(n-1)) besteht und die Datenübertragung synchron zum Taktsignal auf der Adresstaktleitung (ADR_CLK) in n Bit breiten seriellen Datenpaketen erfolgt.

13. Positionsmesseinrichtung nach Anspruch 11, wobei der Datensendekanal (22) aus einer Datentaktleitung (DATA_CLK) und m Datenleitungen (D0 - D(m-1)) besteht und die Datenübertragung synchron zum Taktsignal auf der Datentaktleitung (DATA_CLK) in m Bit breiten seriellen Datenpaketen erfolgt.

14. Positionsmesseinrichtung nach Anspruch 11, wobei das Taktsignal auf der Datentaktleitung (DATA_CLK) aus dem um die Signallaufzeit in der Signalerzeugungseinheit (11) verzögerten Taktsignal auf der Adresstaktleitung (ADR_CLK) besteht.

## Claims

1. Method for operating a position measuring device (10), which has a signal generating unit (11) for generating position data and is connected to a sequential electronics system (100) via a communication unit (12), wherein the transmission of data between the signal generating unit (11) and the communication unit (12) occurs via an internal interface unit (13), with the following steps:
• transmitting measurement data request instructions (RQ), which are transmitted from the sequential electronics system (100) to the position measuring device (10), to the signal generating unit (11) without further time delay to generate measurement data by bypassing the internal interface unit (13),
• transmitting the position data generated as a result of the measurement data request instructions (RQ) from the signal generating unit (11) to the communication unit (12) via the internal interface unit (13).

2. Method according to Claim 1, wherein the measurement data request instructions (RQ) are transmitted to the signal generating unit (11) via a separate data channel (14).

3. Method according to Claim 2, wherein the measurement data request instructions (RQ) are transmitted to the signal generating unit (11) via a separate connection line.

4. Method according to Claim 1, wherein the measurement data request instructions (RQ) in the data stream transmitted by the sequential electronics system (100) are identified in the communication unit (12).

5. Method according to Claim 4, wherein the identified measurement data request instructions (RQ) are separated from the data stream, which is transmitted by the communication unit (12) to the internal interface unit (13).

6. Method according to Claim 1, wherein besides the position data, further measurement data derived from the position data are requested from the position measuring device (10) via the measurement data request instructions (RQ).

7. Position measuring device with
• a signal generating unit (11) for generating measurement data,
• a communication unit (12), by means of which the position measuring device (10) is connected to a sequential electronics system (100),
• an internal interface unit (13), by means of which the transmission of data between the signal generating unit (11) and the communication unit (12) occurs,
• wherein redirection means are provided, by means of which measurement data request instructions (RQ), which are transmitted by the sequential electronics system (100) to the position measuring device (10), can be transmitted to the signal generating unit (11) without further time delay to generate measurement data by bypassing the internal interface unit (13), and
• the redirection means comprise a unit (16), by means of which measurement data request instructions (RQ) are identified in the data stream transmitted by the sequential electronics system (100) and the identified measurement data request instructions (RQ) are separated out of this data stream, and also a separate data channel (14) between the communication unit (12) and the signal generating unit (11) to redirect the measurement data request instructions (RQ) to the signal generating unit (11) by bypassing the internal interface unit (13).

8. Position measuring device according to Claim 7, wherein the data channel (14) is configured as a separate connection line.

9. Position measuring device according to Claim 7, wherein the communication unit (12) is configured in such a way that a bidirectional serial communication is possible between the position measuring device (10) and the sequential electronics system (100).

10. Position measuring device according to Claim 7, wherein further signal processing means (15), by means of which it is possible to process the generated position data, are arranged between the signal generating unit (11) and the internal interface unit (13).

11. Position measuring device according to Claim 7, wherein the data transmission from the internal interface unit (13) to the signal generating unit (11) occurs via an addressing channel (21), and the data transmission from the signal generating unit (11) to the internal interface unit (13) occurs via a data transmission channel (22).

12. Position measuring device according to Claim 11, wherein the addressing channel (21) comprises an address clock line (ADR_CLK) and n address lines (AS0 - AS(n-1)), and the data transmission occurs synchronously with the clock signal on the address clock line (ADR_CLK) in n bit-wide serial data packets.

13. Position measuring device according to Claim 11, wherein the data transmission channel (22) comprises a data clock line (DATA_CLK) and m data lines (D0 - D(m-1)), and the data transmission occurs synchronously with the clock signal on the data clock line (DATA_CLK) in m bit-wide serial data packets.

14. Position measuring device according to Claim 11, wherein the clock signal on the data clock line (DATA CLK) consists of the clock signal on the address clock line (ADR_CLK) delayed by the signal propagation time in the signal generating unit (11).

## Revendications

1. Procédé pour faire fonctionner un dispositif de mesure de position (10) qui comprend, pour produire des données de position, une unité de production de signaux (11) qui est reliée par une unité de communication (12) à une électronique séquentielle (100), cette transmission de données entre l'unité de production (1) et l'unité de communication (12) étant assurée par une unité interne d'interface (13), selon les étapes suivantes :
- transmission des demandes de données de mesure (RQ) de l'électronique séquentielle (100) au dispositif de mesure de position (10), sans retard supplémentaire pour obtenir ces données en contournant l'unité interne d'interface (13) pour arriver à l'unité de production de signaux (11),
- transmission des données de position obtenues à la suite des demandes de données de mesure (RQ), de l'unité de production de signaux (11) à l'unité de communication (12) par l'unité interne d'interface (13).

2. Procédé selon la revendication 1, **caractérisé en ce que** les demandes de données de mesure (RQ) sont transmises à l'unité de production de signaux (11) par un canal de données (14) séparé.

3. Procédé selon la revendication 2, **caractérisé en ce que** les demandes de données de mesure (RQ) sont transmises à l'unité de production de signaux (11) par un conducteur de liaison séparé.

4. Procédé selon la revendication 1, **caractérisé en ce que** dans l'unité de communication (12), les demandes de données de mesure (RQ) sont identifiées dans le flux de données transmises par l'électronique séquentielle (100).

5. Procédé selon la revendication 4, **caractérisé en ce que** les demandes de données de mesure (RQ) identifiées sont séparées du flux de données qui est transmis de l'unité de communication (12) à l'unité interne d'interface (13).

6. Procédé selon la revendication 1, **caractérisé en ce que** le dispositif de mesure de position, par les demandes de données de mesure (RQ) demande, en plus des données de position, d'autres données de mesure déduites des données de position.

7. Dispositif de mesure de position, qui comporte
- une unité de production de signaux (11) pour produire des données de mesure,
- une unité de communication (12) qui relie le dispositif de mesure de position (10) à l'électronique séquentielle (100),
- une unité interne d'interface (13), par laquelle s'effectue la transmission de données entre l'unité de production de signaux (11) et l'unité de communication (12),
et dans lequel
- des moyens de dérivation sont prévus pour que les demandes de données de mesure (RQ) transmises de l'électronique séquentielle (100) au dispositif de mesure de position (10), puissent être transmises à l'unité de production de signaux (11) sans autre retard dans l'obtention de ces données, en contournant l'unité interne d'interface (13),
- les moyens de dérivation comprennent une unité (16) qui assure l'identification des demandes de données de mesure (RQ) dans le flux de données transmis par l'électronique séquentielle (100) et sépare de ce flux les demandes (RQ) identifiées, ainsi qu'un canal de données (14) séparé entre l'unité de communication (12) et l'unité de production de signaux (11), afin de dériver les demandes de données de mesure (RQ) en contournant l'unité interne d'interface (13) pour aboutir à l'unité de production de signaux (11).

8. Dispositif de mesure de position selon la revendication 7, **caractérisé en ce que** le canal de données (14) est constitué par un conducteur séparé.

9. Dispositif de mesure de position selon la revendication 7, **caractérisé en ce que** l'unité de communication (12) est constituée de manière à permettre une liaison sérielle bidirectionnelle entre le dispositif de mesure de position (10) et l'électronique sérielle (100).

10. Dispositif de mesure de position selon la revendication 7, **caractérisé en ce qu'**entre l'unité de production de signaux (11) et l'unité interne d'interface (13) sont disposés d'autres moyens de traitement des signaux (15), par lesquels les données de position obtenues peuvent être traitées.

11. Dispositif de mesure de position selon la revendication 7, **caractérisé en ce que** la transmission des données de l'unité interne d'interface (13) à l'unité de production de signaux (11) s'effectue par un canal d'adressage (21), tandis que la transmission des données de l'unité de production de signaux (11) à l'unité interne d'interface (13) s'effectue par un canal d'envoi de données (22).

12. Dispositif de mesure de position selon la revendication 11, **caractérisé en ce que** le canal d'adressage (21) est composé d'un conducteur de rythme d'adressage (ADR_CLK) et de n conducteurs d'adressage (AS0 à AS(n-1)) que la transmission de données s'effectue en synchronisme avec le signal de rythme sur le conducteur de rythme d'adressage (ADR_CLK) sous la forme de paquets sériels de données à n bits.

13. Dispositif de mesure de position selon la revendication 11, **caractérisé en ce que** le canal d'envoi de données (22) est composé d'un conducteur de rythme de données (DATA_CLK) et de m conducteurs de données (D0 à D(m-1)) et que la transmission de données s'effectue en synchronisme avec le signal de rythme sur le canal de rythme de données (DATA_CLK) sous la forme de paquets sériels de données à m bits.

14. Dispositif de mesure de position selon la revendication 11, **caractérisé en ce que** le signal de rythme sur le conducteur de rythme de données (DATA_CLK) est constitué par le signal de cadence sur le conducteur de rythme d'adresse (ADR_CLK), retardé des temps de parcours du signal dans l'unité de production de signaux (11).
